Europäisches Patentamt

European Patent Office

Office européen des brevets

(19)

(11) **EP 0 884 791 B1**

(12) **FASCICULE DE BREVET EUROPEEN**

(45) Date de publication et mention
de la délivrance du brevet:
**31.07.2002  Bulletin 2002/31**

(51) Int Cl.⁷: **H01M 4/32**, H01M 4/62

(21) Numéro de dépôt: **98401333.4**

(22) Date de dépôt: **04.06.1998**

(54) **Electrode de nickel empatée.**

Beschichtete Nickelelektrode

Pasted nickel electrode

(84) Etats contractants désignés:
**DE FR GB IT**

(30) Priorité: **05.06.1997  FR 9706963**

(43) Date de publication de la demande:
**16.12.1998  Bulletin 1998/51**

(73) Titulaire: **ALCATEL**
**75008 Paris (FR)**

(72) Inventeurs:
• **Bouet, Jacques**
**75015 Paris (FR)**
• **Bernard, Patrick**
**91300 Massy (FR)**

(74) Mandataire: **Sciaux, Edmond et al**
**Compagnie Financiere Alcatel,**
**Département D.P.I.,**
**30, avenue Kléber**
**75016 Paris (FR)**

(56) Documents cités:
EP-A- 0 523 284          EP-A- 0 650 207
EP-A- 0 730 315          EP-A- 0 798 795

• CHEMICAL ABSTRACTS, vol. 108, no. 18, 2 mai
1988 Columbus, Ohio, US; abstract no. 153674,
ISAWA ET AL: "Paste-type nickel cathodes"
XP002057914 -& JP 63 004 561 A (TOSHIBA
BATTERY CO) 9 janvier 1988 -& PATENT
ABSTRACTS OF JAPAN vol. 12, no. 204 (E-620)
[3051] , 11 juin 1988 & JP 63 004561 A (TOSHIBA
BATTERY CO), 9 janvier 1988

• CHEMICAL ABSTRACTS, vol. 108, no. 1, 4 juillet
1988 Columbus, Ohio, US; abstract no. 78679,
ISAWA: "Nonsintered nickel cathodes for
batteries" XP002058072 & JP 62 222 567 A
(TOSHIBA BATTERY CO) 30 septembre 1987 -&
PATENT ABSTRACTS OF JAPAN vol. 12, no. 89
(E-592) [2936] , 23 mars 1988 & JP 62 222567 A
(TOSHIBA BATTERY CO), 30 septembre 1987

• PATENT ABSTRACTS OF JAPAN vol. 006, no.
238 (E-144), 26 novembre 1982 -& JP 57 138776
A (SANYO DENKI KK), 27 août 1982 -&
CHEMICAL ABSTRACTS, vol. 98, no. 4, 24
janvier 1983 Columbus, Ohio, US; abstract no.
19503, XP002058166

• CHEMICAL ABSTRACTS, vol. 114, no. 8, 25
février 1991 Columbus, Ohio, US; abstract no.
65882f, KOSEKI ET AL: "Nickel paste cathodes
for alkaline batteries" XP002057959 -& JP 02 256
162 A (SHIN-KOBE ELECTRIC MACHINERY CO)
16 octobre 1990 -& PATENT ABSTRACTS OF
JAPAN vol. 14, no. 584 (E [1018] , 27 décembre
1990 & JP 02 256162 A (SHIN KOBE ELECTRIC
MACH CO), 16 octobre 1990

• DATABASE WPI Section Ch, Week 7731 Derwent
Publications Ltd., London, GB; Class A18, AN
77-55095Y XP002057903 & JP 52 074 842 A
(MATSUSHITA ELEC IND CO LTD) , 23 juin 1977

• PATENT ABSTRACTS OF JAPAN vol. 013, no.
268 (E-775), 20 juin 1989 & JP 01 059767 A
(HITACHI CHEM CO LTD), 7 mars 1989 -&
CHEMICAL ABSTRACTS, vol. 110, no. 26, 26 juin
1989 Columbus, Ohio, US; abstract no. 234692,
XP002058167

- **CHEMICAL ABSTRACTS, vol. 116, no. 20, 18 mai 1992 Columbus, Ohio, US; abstract no. 197754s, HORIBA ET AL: "Nickel cathodes for alkaline secondary battery and their manufacture" XP002058079 & JP 04 004 560 A (HITACHI CHEMICAL CO) 9 janvier 1992 -& PATENT ABSTRACTS OF JAPAN vol. 16, no. 146 (E-188), 10 avril 1992 & JP 04 004560 A (HITACHI CHEM CO), 9 janvier 1992**

**EP 0 884 791 B1**

**Description**

La présente invention concerne une électrode de nickel de type empâtée utilisée notamment comme électrode positive pour accumulateur à électrolyte alcalin.

Il existe plusieurs types d'électrode positive de nickel susceptible d'être utilisée dans un accumulateur à électrolyte alcalin :

- l'électrode de type pochette obtenue en tassant la matière électrochimiquement active, en l'occurrence l'hydroxyde $Ni(OH)_2$, mélangée à un matériau conducteur dans une pochette métallique dont les parois sont perforées de telle façon que l'électrolyte puisse imbiber la matière active mais que cette dernière ne puisse ressortir de la pochette ;
- l'électrode de type fritté, pour laquelle la matière électrochimiquement active est déposée dans un support fritté par précipitation chimique ou électrochimique.

Pour répondre au besoin croissant des utilisateurs, les électrodes positives de nickel peuvent aujourd'hui être réalisées de manière empâtée. Par rapport aux autres types d'électrode, une électrode de type empâté contient une plus grande quantité de matière électrochimiquement active ; sa capacité volumique est donc augmentée et son coût de fabrication est plus faible.

Une électrode de nickel de type empâté est réalisée par dépôt d'une pâte soit sur un support conducteur bidimensionnel comme un métal déployé, une grille, un tissu, un feuillard plein ou un feuillard perforé, soit dans un support conducteur tridimensionnel poreux comme un feutre, une mousse métallique ou une mousse en carbone. Lors de la fabrication de l'électrode, un solvant volatil est ajouté à la pâte pour ajuster sa viscosité afin de faciliter la mise en forme. Une fois la pâte déposée sur ou dans le support, l'ensemble est comprimé et séché pour obtenir une électrode de densité et d'épaisseur souhaitées.

La pâte comporte, comme constituants principaux, la matière dite "active", habituellement sous forme de poudre, un liant polymère et, le plus souvent, un matériau conducteur. Dans une électrode de nickel de type empâté, la matière active constituant la pâte contient généralement un hydroxyde à base de nickel. L'hydroxyde de nickel est un composé peu conducteur qui nécessite l'adjonction d'un matériau conducteur permettant une bonne percolation électrique.

Le document FR-2 567 326 propose l'adjonction de poudre de nickel comme matériau conducteur. Selon le document JP-63 004 561, pour améliorer la conductivité on peut aussi utiliser comme matériau conducteur des fibres courtes de nickel.

Le document EP-0 581 275 décrit une électrode de nickel de type empâté qui contient, comme matière active, de l'hydroxyde de nickel pulvérulent et comme matière conductrice, de la poudre de nickel filamenteuse comprenant de nombreuses zones en structure de chaînes pointant dans les trois directions de l'espace, le diamètre moyen des zones en structure de chaînes étant inférieur ou égal à 1,3 micron. Avantageusement, la poudre de nickel est sous la forme d'un mélange de particules fines (de 0,6 à 1,0 micron de diamètre) et de particules plus grosses (de diamètre inférieur à 1,3 micron). Cette électrode présente une capacité améliorée et une durée de vie allongée.

Le document EP-0 658 948 décrit un accumulateur alcalin Ni-MH doté d'une électrode positive du type électrode de nickel empâtée constituée d'hydroxyde de nickel à titre de matière active, et de graphite à titre de matière conductrice. Cette électrode de nickel positive confère à l'accumulateur une stabilité accrue pour des températures d'utilisation élevées. Il est précisé, en outre, que cette électrode de nickel positive ne peut pas être associée à une électrode négative au cadmium, car dans ce cas le graphite s'oxyde en ions carbonate qui passent dans l'électrolyte.

Pour augmenter les performances d'une électrode de nickel non-frittée en décharge rapide, le document JP-57 138 776 propose un matériau conducteur constitué d'un mélange d'un conducteur sous forme de poudre (powder-like conductive agent), de préférence de la poudre de graphite, et d'un conducteur sous forme de fibres (fiber-like conductive agent) par exemple en carbone ou en acier inoxydable.

On améliore la répartition du réseau conducteur en utilisant comme matériau conducteur un composé du cobalt tel que du cobalt métallique Co, un hydroxyde de cobalt $Co(OH)_2$ (JP-6 251 157), un sel de cobalt (EP-0 490 991) et/ou un oxyde de cobalt CoO (JP-6 283 170).

Lors de la première charge d'un accumulateur alcalin muni d'une électrode de nickel contenant un composé de cobalt comme matériau conducteur, ledit composé est oxydé en oxyhydroxyde de cobalt CoOOH dans lequel le cobalt est porté au degré d'oxydation +3. Cet oxyhydroxyde de cobalt est stable dans le domaine normal de fonctionnement de l'électrode positive de nickel et insoluble dans l'électrolyte alcalin. Il assure la percolation électrique de l'électrode.

Stocké à l'état complètement déchargé, un accumulateur alcalin Ni-Cd ou Ni-MH possédant une électrode positive de nickel de type empâté contenant un composé de cobalt voit sa tension décroître avec le temps. Lorsque la durée du stockage augmente, sa tension tend vers 0V, la cinétique de ce phénomène étant fonction de la température de stockage. Dans ces conditions de stockage, les accumulateurs alcalins à électrode positive de type empâté subissent une perte de capacité irréversible provenant de l'électrode positive.

En effet, lorsque la tension de l'électrode positive est proche de 0 Volt, l'oxyhydroxyde de cobalt qu'elle contient, qui n'est stable que dans le domaine de fonctionnement normal de l'électrode, se réduit lentement. Le cobalt est alors porté d'abord au degré d'oxydation +2,66 dans $Co_3O_4$, puis au degré d'oxydation +2 dans $Co(OH)_2$, et enfin au degré d'oxydation 0 dans Co. Or l'hydroxyde de cobalt $Co(OH)_2$ est un composé très soluble dans l'électrolyte. Par conséquent, on observe après une période de stockage de plusieurs mois, une perte de conductivité due à la dissolution partielle du réseau percolant de l'électrode empâtée. Il en résulte une perte irréversible de capacité qui peut dépasser 15%. Cette perte irréversible de capacité se produit quel que soit le composé de cobalt initialement introduit dans la pâte.

Le document EP-0 634 804 décrit une électrode de nickel de type empâté pour accumulateur alcalin dont la matière active est essentiellement constituée d'hydroxyde de nickel et dont la matière conductrice contient au moins un composé choisi parmi le cobalt, l'hydroxyde de cobalt et une poudre de carbone. L'électrode de nickel selon EP-0 634 804 est dotée d'une densité d'énergie élevée sur une gamme de températures d'utilisation plus large que les électrodes classiques.

La présente invention a pour but de proposer une électrode positive de nickel de type empâté pour accumulateur alcalin qui ne présente pas de perte irréversible de capacité pendant le stockage.

L'objet de la présente invention est une électrode positive de nickel de type empâté qui ne présente pas de perte de capacité irréversible en stockage. Cette électrode comporte un collecteur de courant et une pâte comprenant une matière active à base d'hydroxyde de nickel sous forme de poudre, un matériau conducteur constitué d'un mélange d'un conducteur sous forme de poudre et d'un conducteur sous forme de fibres conductrices, et au moins un liant polymère, caractérisée en ce que ledit conducteur sous forme de poudre est consfitué de particules conductrices dont les trois dimensions de l'espace sont du même ordre de grandeur et définies par une dimension moyenne D1 inférieure ou égale à D/20, et lesdites fibres conductrices ont une dimension moyenne D2 inférieure ou égale à D et une longueur moyenne L2 supérieure ou égale à 25 fois la valeur de D2, D étant le diamètre moyen de la poudre de ladite matière active.

La forme des particules conductrices peut être sphérique ou complètement irrégulière. On entend par "particule" une très petite quantité de matière, dont les trois dimensions de l'espace sont du même ordre de grandeur, définie par une dimension moyenne D1.

On entend par "fibre" une très petite quantité de matière, dont une dimension de l'espace est grande devant les deux autres, définie par une dimension moyenne D2 et une longueur moyenne L2.

Les particules conductrices ont de préférence une dimension moyenne D1 inférieure ou égale à D/100, et les fibres conductrices ont une dimension moyenne D2 inférieure ou égale à D et une longueur moyenne L2 supérieure ou égale à 75 fois la valeur de D2.

Le diamètre moyen D de la matière active sous forme de poudre est avantageusement compris entre 5 et 15$\mu$m. On choisira, de préférence, D1 inférieure ou égale à 0,1 $\mu$m et D2 inférieure ou égale à 2 $\mu$m.

De préférence, les fibres conductrices sont des fibres de carbone, des fibres de métal ou des fibres recouvertes de métal, comme le nickel par exemple. De préférence, les particules conductrices sont des particules de carbone ou des particules de métal, comme le nickel par exemple.

De préférence, la matière conductrice représente entre 3 et 15% en poids de la matière active. Au-delà de cette valeur, la capacité volumique de l'électrode diminue du fait de la grande proportion de conducteur dans l'électrode.

Il est bien entendu que le terme "matière active à base d'hydroxyde de nickel' utilisé dans la présente demande peut signifier un hydroxyde de nickel, un hydroxyde contenant principalement du nickel, mais également un hydroxyde de nickel contenant au moins un hydroxyde syncristallisé d'un élément choisi parmi le cobalt, le manganèse et au moins un hydroxyde syncristallisé d'un élément choisi parmi le cadmium, le zinc, le magnésium, le calcium, l'yttrium, le cuivre, l'aluminium.

La matière active à base d'hydroxyde de nickel contient avantageusement 1 à 4% d'hydroxyde de cobalt syncristallisé et 2 à 8% d'hydroxyde de zinc syncristallisé.

Un hydroxyde syncristallisé contenu dans l'hydroxyde de nickel est un hydroxyde formant une solution solide avec l'hydroxyde de nickel, c'est-à-dire occupant, en proportion continûment variable, les sites atomiques définis par le réseau cristallin de l'hydroxyde de nickel.

Selon un mode de réalisation de l'invention, le collecteur de courant est une mousse de nickel et la pâte contient outre ladite matière active et ledit conducteur, un premier liant à base de polytétrafluoroéthylène (PTFE) et un deuxième liant choisi parmi la carboxyméthylcellulose (CMC), l'hydroxypropylméthylcellulose (HPMC), l'hydroxyéthylcellulose (HEC), l'hydroxypropylcellulose (HPC), le polyfluorure de vinylidène (PVDF).

La pâte contient avantageusement 55 à 75% en masse, de préférence 60 à 70% en masse, de matière active, 1 à 10% en masse de particules conductrices et 1 à 10% en masse, de préférence 2 à 6% en masse, de fibres conductrices.

D'autres avantages et particularités de l'invention apparaîtront à la lecture des exemples de réalisation suivants, donnés à titre illustratif et non limitatif.

Exemple 1 :

Une électrode de nickel standard "a" est réalisée en utilisant une pâte dont la composition exprimée en pourcentage pondéral par rapport au poids de la pâte est approximativement la suivante :

- une poudre d'hydroxyde dont le diamètre moyen est de 12μm, composée majoritairement de nickel, contenant environ 3% d'hydroxyde de cobalt syncristallisé et environ 4,5% d'hydroxyde de zinc syncristallisé : 66%,
- cobalt métal : 1%,
- oxyde de cobalt CoO : 5%,
- eau : 26,2%,
- un gel à base de CMC : 0,3 %,
- PIFE : 1,5 %.

La pâte ainsi obtenue est introduite dans une mousse de nickel de porosité environ 95%. L'ensemble est séché puis laminé pour obtenir l'électrode "a".

Un accumulateur Aa de type nickel-cadmium est assemblé. L'accumulateur Aa contient l'électrode "a" précédemment réalisée, entourée de deux électrodes de cadmium de type fritté connues. Les électrodes sont séparées par deux couches de polyamide non tissé et une couche d'une membrane cellulosique imperméable à l'oxygène. Le faisceau est imprégné d'un électrolyte alcalin constitué d'une solution aqueuse d'hydroxyde de potassium KOH 9,1M et d'hydroxyde de lithium LiOH 0,2 M.

Après un repos de 48 heures, l'accumulateur Aa est soumis à un test de cyclage électrochimique dans les conditions suivantes :

Cycle 1 :

- charge à 0,1 lc pendant 10 heures à 20°C, où lc est le courant nécessaire pour décharger la capacité nominale d'un accumulateur en 1 heure ;
- décharge à 0,2 lc jusqu'à une tension d'arrêt de 1 Volt.

Cycles 2 à 10 :

- charge à 0,2 lc pendant 7,5 heures à 20°C ;
- décharge à 0,2 lc jusqu'à 1 Volt.

L'accumulateur Aa est alors stocké à l'état déchargé à température ambiante. Au bout d'environ deux mois, on observe que la tension de l'accumulateur Aa est devenue inférieure à la tension de stabilité de l'oxyhydroxyde de nickel (1,05V).

Après 6 mois de stockage, on effectue une mesure de la capacité restante dans les conditions suivantes :

Cycles 11 à 16 :

- charge à 0,2 lc pendant 7,5 heures à 20°C ;
- décharge à 0,2 lc jusqu'à 1 Volt.

Les mesures de capacités massiques rapportées au poids du mélange d'hydroxyde à base de nickel et de matière conductrice, à savoir l'oxyde de cobalt CoO et le cobalt métallique Co, mesurées avant (cycle 10) et après (cycle 16) 6 mois de stockage, sont rassemblées dans le tableau 1 ci-dessous.

On peut constater que, après un stockage prolongé de l'accumulateur Aa comportant une électrode standard contenant de l'oxyde de cobalt et du cobalt métallique, la perte de capacité irréversible est de 12%.

Exemple 2:

Une électrode de nickel "b" est réalisée en utilisant un réseau conducteur composé d'une poudre de carbone de granulométrie moyenne $350.10^{-10}$m et de fibres de carbone de dimension moyenne 10μm et de longueur moyenne 300μm.

L'électrode de nickel "b" est réalisée en utilisant une pâte dont la composition exprimée en pourcentage pondéral par rapport au poids de la pâte est approximativement la suivante :

- une poudre d'hydroxyde dont le diamètre moyen est de 12µm, composée majoritairement de nickel, contenant environ 3% d'hydroxyde de cobalt syncristallisé et environ 4,5% d'hydroxyde de zinc syncristallisé : 66%,
- une poudre de carbone de granulométrie moyenne $350.10^{-10}$m : 2%,
- des fibres de carbone de dimension moyenne 10µm et de longueur moyenne 300µm : 2%,
- eau : 28%,
- un gel à base de CMC : 0,3%,
- PTFE: 1,7%.

Un accumulateur Ab contenant l'électrode "b" a été assemblé de manière analogue à celle décrite dans l'exemple 1 pour l'accumulateur Aa ; un cyclage identique à l'exemple 1 est effectué.

Les rendements de la matière active avant et après un stockage de 6 mois sont rassemblés dans le tableau 1 ci-dessous.

On peut tout d'abord remarquer que le rendement avant stockage de l'accumulateur Ab contenant l'électrode "b" est du même ordre que le rendement avant stockage de l'accumulateur Aa comportant une électrode standard dont le réseau conducteur est à base de cobalt métallique et d'oxyde de cobalt.

De plus, on peut constater qu'après stockage prolongé, la perte de capacité irréversible de l'accumulateur Ab est égale à 0%. On comprend donc que la perte de capacité irréversible, due à un stockage prolongé, est annulée pour l'accumulateur Ab tandis qu'elle est de 12% pour un accumulateur doté d'une électrode de nickel standard contenant un réseau conducteur à base de composés du cobalt.

Exemple 3 :

Une électrode de nickel "c" est réalisée en utilisant un réseau conducteur composé d'une poudre de carbone de granulométrie moyenne $350.10^{-10}$m et de fibres de carbone de dimension moyenne 7µm et de longueur moyenne 300µm.

L'électrode de nickel "c" est réalisée en utilisant une pâte dont la composition exprimée en pourcentage pondéral par rapport au poids de la pâte est approximativement la suivante :

- une poudre d'hydroxyde dont le diamètre moyen est de 12µm, composée majoritairement de nickel, contenant environ 3% d'hydroxyde de cobalt syncristallisé et environ 4,5% d'hydroxyde de zinc syncristallisé : 66%,
- une poudre de carbone de granulométrie moyenne $350.10^{-10}$m : 2%,
- des fibres de carbone de dimension moyenne 7µm et de longueur moyenne 300µm : 2%,
- eau : 28%,
- un gel à base de CMC : 0,3%,
- PTFE : 1,7%.

Un accumulateur Ac contenant l'électrode "c" a été assemblé de manière analogue à celle décrite dans l'exemple 1 pour l'accumulateur Aa ; un cyclage identique à l'exemple 1 est effectué.

Les rendements de la matière active avant et après stockage prolongé sont rassemblés dans le tableau 1 ci-dessous.

On peut tout d'abord remarquer que le rendement avant stockage de l'accumulateur Ac contenant l'électrode "c" est du même ordre que le rendement avant stockage de l'accumulateur Aa contenant une électrode standard dont le réseau conducteur est à base de cobalt métallique et d'oxyde de cobalt.

Le rendement après stockage de l'accumulateur Ac est supérieur au rendement de l'accumulateur Ab, les fibres de conducteur utilisées présentant un rapport L2/D2 plus important. Par conséquent la conductivité du réseau percolant de l'électrode "c" est supérieure à l'électrode "b".

De plus, on peut constater qu'après stockage prolongé, la perte de capacité irréversible de l'accumulateur Ac est égale à 0%. On comprend donc que les pertes de capacités irréversibles, dues à un stockage prolongé, ont été annulées dans le cas de l'accumulateur Ac, tandis qu'elles sont de 12% pour un accumulateur doté d'une électrode de nickel standard contenant un réseau à base de composés du cobalt.

Exemple 4 :

Une électrode de nickel "d" est réalisée en utilisant un réseau conducteur composé d'une poudre de carbone de granulométrie moyenne $350.10^{-10}$m et de fibres de carbone de dimension moyenne 10µm et de longueur moyenne 300µm.

L'électrode de nickel "d" est réalisée en utilisant une pâte dont la composition exprimée en pourcentage pondéral par rapport au poids de la pâte est approximativement la suivante :

- une poudre d'hydroxyde dont le diamètre moyen est de 12μm, composée majoritairement de nickel, contenant environ 3% d'hydroxyde de cobalt syncristallisé et environ 4,5% d'hydroxyde de zinc syncristallisé : 66%,
- une poudre de carbone de granulométrie moyenne $350.10^{-10}$m : 2%,
- des fibres de carbone de dimension moyenne 10μm et de longueur moyenne 300μm : 2%,
- un solvant à base de NMP (N-méthyl-pyrolidone) : 26,5%,
- PVDF : 3,5%.

Un accumulateur Ad contenant l'électrode "d" a été assemblé de manière analogue à celle décrite dans l'exemple 1 pour l'accumulateur Aa ; un cyclage identique à l'exemple 1 est effectué.

Les rendements de l'accumulateur Ad avant et après stockage sont rassemblés dans le tableau 1 ci-dessous.

On peut tout d'abord remarquer que le rendement avant stockage de l'accumulateu Ad contenant l'électrode "d", est du même ordre que le rendement avant stockage de l'accumulateur Aa contenant une électrode standard dont le réseau conducteur est à base de cobalt métallique et d'oxyde de cobalt.

De plus, on peut constater qu'après stockage prolongé, la perte de capacité irréversible de l'accumulateur Ad est égale à 0%. On comprend donc que la perte de capacité irréversible due à un stockage prolongé a été annulée dans le cas de l'accumulateur Ad, tandis qu'elle est de 12% pour un accumulateur doté d'une électrode de nickel standard contenant un réseau à base de composés du cobalt.

Exemple 5 :

Une électrode de nickel "e" en dehors du champ de l'invention est réalisée en utilisant un réseau conducteur composé d'une poudre de nickel de granulométrie 1μm et de fibres de carbone de dimension moyenne 10μm et de longueur moyenne 300μm.

L'électrode de nickel "e" est réalisée en utilisant une pâte dont la composition exprimée en pourcentage pondéral par rapport au poids de la pâte est approximativement la suivante :

- une poudre d'hydroxyde de diamètre moyen 12μm, composée majoritairement de nickel, contenant environ 3% d'hydroxyde de cobalt syncristallisé et environ 4,5% d'hydroxyde de zinc syncristallisé : 66%,
- une poudre de nickel de granulométrie 1μm : 2%,
- des fibres de carbone de dimension moyenne 10μm et de longueur moyenne 300μm :2%,
- eau : 28%,
- un gel à base de CMC : 0,3%
- PTFE:1,7%

Un accumulateur Ae contenant l'électrode "e" a été assemblé de manière analogue à celle décrite dans l'exemple 1 pour l'accumulateur Aa ; un cyclage identique à l'exemple 1 est effectué.

Les rendements de l'accumulateur Ae avant et après stockage sont rassemblés dans le tableau 1 ci-dessous.

On peut tout d'abord remarquer que le rendement de l'accumulateur Ae contenant l'électrode "e" est très inférieur (-32%) au rendement de l'accumulateur Aa contenant une électrode standard dont le réseau conducteur est à base de cobalt métallique et d'oxyde de cobalt.

De plus on peut constater après stockage prolongé, que la perte de capacité irréversible de l'accumulateur Ae doté d'une électrode contenant un composé conducteur de granulométrie D1 > D/20 (D étant le diamètre moyen de la poudre hydroxyde) est de 11%. Cette perte de capacité est équivalente à la perte observée pour une électrode de nickel standard contenant un réseau conducteur à base de composés du cobalt.

TABLEAU I

| SERIE | $A_a$ | $A_b$ | $A_c$ | $A_d$ | $A_e$ |
|---|---|---|---|---|---|
| D (μm) | 12 | 12 | 12 | 12 | 12 |
| D/20 (μm) | | 0,6 | 0,6 | 0,6 | 0,6 |
| D1 (μm) | | 0,035 | 0,035 | 0,035 | 1 |

TABLEAU I   (suite)

| SERIE | $A_a$ | $A_b$ | $A_c$ | $A_d$ | $A_e$ |
|---|---|---|---|---|---|
| D2 (µm) | | 10 | 7 | 10 | 10 |
| $\frac{L2}{D2}$ | | 30 | 42,8 | 30 | 30 |
| Rendement au cycle 10 (mAh/g) | 276 | 271 | 278 | 275 | 189 |
| Rendement au cycle 16 (mAh/g) | 242 | 277 | 279 | 275 | 169 |

**Revendications**

1. Electrode positive de nickel de type empâté comportant un collecteur de courant et une pâte comprenant une matière active à base d'hydroxyde de nickel sous forme de poudre, un matériau conducteur constitué d'un mélange d'un conducteur sous forme de poudre et d'un conducteur sous forme de fibres conductrices, et au moins un liant polymère, **caractérisée en ce que** ledit conducteur sous forme de poudre est constitué de particules conductrices dont les trois dimensions de l'espace sont du même ordre de grandeur et définies par une dimension moyenne D1 inférieure ou égale à D/20, et lesdites fibres conductrices ont une dimension moyenne D2 inférieure ou égale à D et une longueur moyenne L2 supérieure ou égale à 25 fois la valeur de D2, D étant le diamètre moyen de la poudre de ladite matière active.

2. Electrode selon la revendication 1, **caractérisée en ce que** D1 est inférieure ou égale à D/100, D2 est inférieure ou égale à D et L2 est supérieure ou égale à 75 fois la valeur de D2.

3. Electrode selon l'une des revendications 1 et 2, **caractérisée en ce que** D est compris entre 5µm et 15µm.

4. Electrode selon l'une des revendications précédentes, **caractérisée en ce que** D1 est inférieure ou égale à 0,1µm.

5. Electrode selon l'une des revendications précédentes, **caractérisée en ce que** D2 est inférieure ou égale à 2µm.

6. Electrode selon l'une des revendications précédentes, **caractérisée en ce que** les fibres conductrices sont choisies parmi des fibres de carbone, des fibres de métal ou des fibres recouvertes de métal comme le nickel.

7. Electrode selon l'une des revendications précédentes, **caractérisée en ce que** les particules conductrices sont choisies parmi des particules de carbone ou des particules de métal.

8. Electrode selon l'une des revendications précédentes, **caractérisée en ce que** ladite matière conductrice représente entre 3% et 15% en poids de la matière active.

9. Electrode selon l'une des revendications précédentes, **caractérisée en ce que** la matière active à base d'hydroxyde de nickel est un hydroxyde contenant principalement du nickel et au moins un hydroxyde syncristallisé d'un élément choisi parmi le cobalt, le manganèse et au moins un hydroxyde syncristallisé d'un élément choisi parmi le cadmium, le zinc, le magnésium, le calcium, l'yttrium, le cuivre, l'aluminium.

10. Electrode selon l'une des revendications précédentes, **caractérisée en ce que** la matière active à base d'hydroxyde de nickel contient 1% à 4% d'hydroxyde de cobalt syncristallisé et 2% à 8% d'hydroxyde de zinc syncristallisé.

11. Electrode selon l'une des revendications précédentes, **caractérisée en ce que** le collecteur de courant est une mousse de nickel.

12. Electrode selon l'une des revendications précédentes, **caractérisée en ce que** la pâte contient un premier liant à base de polytétrafluoroéthylène et un deuxième liant choisi parmi la carboxyméthylcellulose, l'hydroxypropylméthylcellulose, l'hydroxyéthylcellulose, l'hydroxypropylcellulose, et le polyfluorure de vinylidène.

13. Electrode selon l'une des revendications précédentes, **caractérisée en ce que** la pâte contient 55% à 75% en masse de matière active, 1% à 10% en masse de particules conductrices et 1% à 10% en masse de fibres conductrices.

**14.** Electrode selon la revendication 12, **caractérisée en ce que** la pâte contient 60% à 70% en masse de matière active, 1% à 10% en masse de particules conductrices et 2% à 6% en masse de fibres conductrices.

**Patentansprüche**

**1.** Positive Nickelelektrode vom Pastentyp, welche einen Stromkollektor und eine Paste aufweist, die ein aktives Material auf der Basis von Nickelhydroxid in Pulverform, ein leitfähiges Material, welches aus einer Mischung eines Leiters in Pulverform und eines Leiters in Form von leitfähigen Fasern besteht, und wenigstens ein Polymerbindemittel umfasst, **dadurch gekennzeichnet, dass** der Leiter in Pulverform aus leitfähigen Partikeln gebildet ist, deren drei Raumabmessungen in der gleichen Größenordnung sind und durch eine mittlere Größe D1 kleiner oder gleich D/20 definiert sind, und die leitfähigen Fasern eine mittlere Größe D2 kleiner oder gleich D und eine mittlere Länge L2 größer oder gleich dem 25-fachen Wert von D2 haben, wobei D der mittlere Durchmesser des Pulvers des aktiven Materials ist.

**2.** Elektrode nach Anspruch 1, **dadurch gekennzeichnet, dass** D1 kleiner oder gleich D/100, D2 kleiner oder gleich D und L2 größer oder gleich dem 75-fachen des Werts von D2 ist.

**3.** Elektrode nach einem der Ansprüche 1 und 2, **dadurch gekennzeichnet, dass** D zwischen 5 µm und 15 µm liegt.

**4.** Elektrode nach einem der vorhergehenden Ansprüche, **dadurch gekennzeichnet, dass** D1 kleiner oder gleich 0,1 µm ist.

**5.** Elektrode nach einem der vorhergehenden Ansprüche, **dadurch gekennzeichnet, dass** D2 kleiner oder gleich 2 µm ist.

**6.** Elektrode nach einem der vorhergehenden Ansprüche, **dadurch gekennzeichnet, dass** die leitfähigen Fasem aus Kohlenstofffasern, Metallfasem oder von Metall, wie Nickel, bedeckte Fasern gewählt sind.

**7.** Elektrode nach einem der vorhergehenden Ansprüche, **dadurch gekennzeichnet, dass** die leitfähigen Partikel aus Kohlenstoffpartikeln oder Metallpartikeln gewählt sind.

**8.** Elektrode nach einem der vorhergehenden Ansprüche, **dadurch gekennzeichnet, dass** das leitfähige Material zwischen 3 und 15 Gew.-% des aktiven Materials ausmacht.

**9.** Elektrode nach einem der vorhergehenden Ansprüche, **dadurch gekennzeichnet, dass** das aktive Material auf der Basis von Nickelhydroxid ein Hydroxid ist, welches hauptsächlich Nickel und wenigstens ein mit einem Element, gewählt aus Kobalt, Mangan, synkristallisiertes Hydroxid, und wenigstens ein mit einem Element, gewählt aus Kadmium, Zink, Magnesium, Kalzium, Yttrium, Kupfer, Aluminium, synkristallisiertes Hydroxid enthält.

**10.** Elektrode nach einem der vorhersehenden Ansprüche, **dadurch gekennzeichnet, dass** aktive Material auf der Basis von Nickelhydroxid 1% bis 4% synkristallisiertes Kobalthydroxid und 2% bis 8% synkristallisiertes Zinkhydroxid enthält.

**11.** Elektrode nach einem der vorhergehenden Ansprüche, **dadurch gekennzeichnet, dass** der Stromkollektor ein Nickelschaum ist.

**12.** Elektrode nach einem der vorhergehenden Ansprüche, **dadurch gekennzeichnet, dass** die Paste ein erstes Bindemittel auf der Basis von Polytetrafluorethylen und ein zweites Bindemittel, welches aus Carboxymethylzellulose, Hydroxypropymethylzellulose, Hydroxyethylzellulose, Hydroxypropylzellulose und Vinylidenpolyfluorid gewählt ist, enthält.

**13.** Elektrode nach einem der vorhergehenden Ansprüche, **dadurch gekennzeichnet, dass** die Paste 55 bis 75 Massen-% aktives Material, 1 bis 10 Massen-% leitfähige Partikel und 1 bis 10 Massen-% leitfähige Fasern enthält.

**14.** Elektrode nach Anspruch 12, **dadurch gekennzeichnet, dass** die Paste 60 bis 70 Massen-% aktives Material, 1 bis 10 Massen-% leitfähige Partikel und 2 bis 6 Massen-% leitfähige Fasern enthält.

**Claims**

1.  A nickel positive electrode of the pasted type including a current collector and a paste comprising a nickelhydroxide-based active material in powder form, a conductor constituted by a mixture of a conductor in the form of powder and of a conductor in the form of conductive fibers, and at least one polymer binder, said electrode being **characterized in that** said conductor in the form of powder is constituted by conductive particles of substantially the same size in all three dimensions that are defined by an average dimension D1 not greater than D/20, and said conductive fibers have an average dimension D2 not greater than D, and an average length L2 not less than 25 times the value of D2, D being the average diameter of the powder of said active material.

2.  An electrode according to claim 1, **characterized in that** D1 is not greater than D/100, D2 is not greater than D, and L2 is not less than 75 times the value of D2.

3.  An electrode according to claim 1 or 2, **characterized in that** D lies in the range 5 μm to 15 μm.

4.  An electrode according to any preceding claim, **characterized in that** D1 is not greater than 0.1 μm.

5.  An electrode according to any preceding claim, **characterized in that** D2 is not greater than 2 μm.

6.  An electrode according to any preceding claim, **characterized in that** the conductive fibers are selected from carbon fibers, metal fibers, or fibers covered in a metal such as nickel.

7.  An electrode according to any preceding claim, **characterized in that** the conductive particles are selected from carbon particles, or metal particles.

8.  An electrode according to any preceding claim, **characterized in that** said conductor represents between 3% and 15% by weight of the active material.

9.  An electrode according to any preceding claim, **characterized in that** the nickelhydroxide-based active material is a hydroxide containing mainly nickel and at least one hydroxide syncrystallized with an element selected from cobalt and manganese, and at least one hydroxide syncrystallized with an element selected from cadmium, zinc, magnesium, calcium, yttrium, copper, and aluminum.

10. An electrode according to any preceding claim, **characterized in that** the nickelhydroxide-based active material contains 1% to 4% syncrystallized cobalt hydroxide, and 2% to 8% syncrystallized zinc hydroxide.

11. An electrode according to any preceding claim, **characterized in that** the current collector is a nickel foam.

12. An electrode according to any preceding claim, **characterized in that** the paste contains a first binder having a polytetrafluoroethylene base, and a second binder selected from carboxymethyl cellulose, hydroxypropylmethyl cellulose, hydroxyethyl cellulose, hydroxypropyl cellulose, and polyvinylidene fluoride.

13. An electrode according to any preceding claim, **characterized in that** the paste contains 55% to 75% by weight of active material, 1% to 10% by weight of conductive particles, and 1% to 10% by weight of conductive fibers.

14. An electrode according to claim 12, **characterized in that** the paste contains 60% to 70% by weight of active material, 1% to 10% by weight of conductive particles, and 2% to 6% by weight of conductive fibers.